**Europäisches Patentamt**

**European Patent Office**

**Office européen des brevets**

(11) Veröffentlichungsnummer: **0 318 940**
**A2**

# (12) EUROPÄISCHE PATENTANMELDUNG

(21) Anmeldenummer: **88119948.3**

(51) Int. Cl.⁴: **A01D 43/06 , B01D 46/42**

(22) Anmeldetag: **30.11.88**

(30) Priorität: **01.12.87 DE 3740702**

(43) Veröffentlichungstag der Anmeldung:
**07.06.89 Patentblatt 89/23**

(84) Benannte Vertragsstaaten:
**AT BE CH ES FR GB GR IT LI LU NL SE**

(71) Anmelder: **Maschinen-Mohr Inh.: Hermann Mohr**
**Höttinger Strasse**
**D-8836 Ellingen(DE)**

(72) Erfinder: **Mohr, Hermann**
**Hoettinger Strasse 44**
**D-8836 Ellingen(DE)**

(74) Vertreter: **Patentanwälte Czowalla . Matschkur + Partner**
**Dr.-Kurt-Schumacher-Strasse 23 Postfach 9109**
**D-8500 Nürnberg 11(DE)**

(54) **Mäh- und Kehrvorrichtung.**

(57) Mäh- und Kehrvorrichtung mit einem auf einem Fahrzeug angeordneten, nach rückwärts über eine aufschwenkbare Türklappe geschlossenen Behälter mit einem teilweise geneigten Behälterboden, in den über einen das vorzugsweise an einem Zugfahrzeug befestigte Mäh- bzw. Kehrwerk übergreifenden Ansaugkasten, eine flexible Rohrleitung und ein Gebläse das abgemähte Gras, Laub, Staub od.dgl. eingeblasen wird, wobei das Gebläse einschließlich seiner Antriebsvorrichtung unter dem geneigten Behälterboden am Fahrgestell angeordnet ist, mit einem durch einen leicht lösbar unter die mit ersten Ausblasöffnungen versehene Behälterdecke einhängbaren Staubfilterkasten, dessen der Türklappe des Behälters zugewandte Einlaßklappe in der Öffnungsstellung zweite Deckenausblasöffnungen des Behälters dichtend verschließt.

FIG. 1

## Mäh- und Kehrvorrichtung

Die Erfindung bezieht sich auf eine Mäh- und Kehrvorrichtung mit einem auf einem Fahrzeug angeordneten, nach rückwärts über eine aufschwenkbare Türklappe geschlossenen Behälter mit einem teilweise geneigten Behälterboden, in den über einen das vorzugsweise an einem Zugfahrzeug befestigte Mäh- bzw. Kehrwerk übergreifenden Ansaugkasten, eine flexible Rohrleitung und ein Gebläse das abgemähte Gras, Laub, Staub od.dgl. eingeblasen wird, wobei das Gebläse einschließlich seiner Antriebsvorrichtung unter dem geneigten Behälterboden am Fahrgestell angeordnet ist.

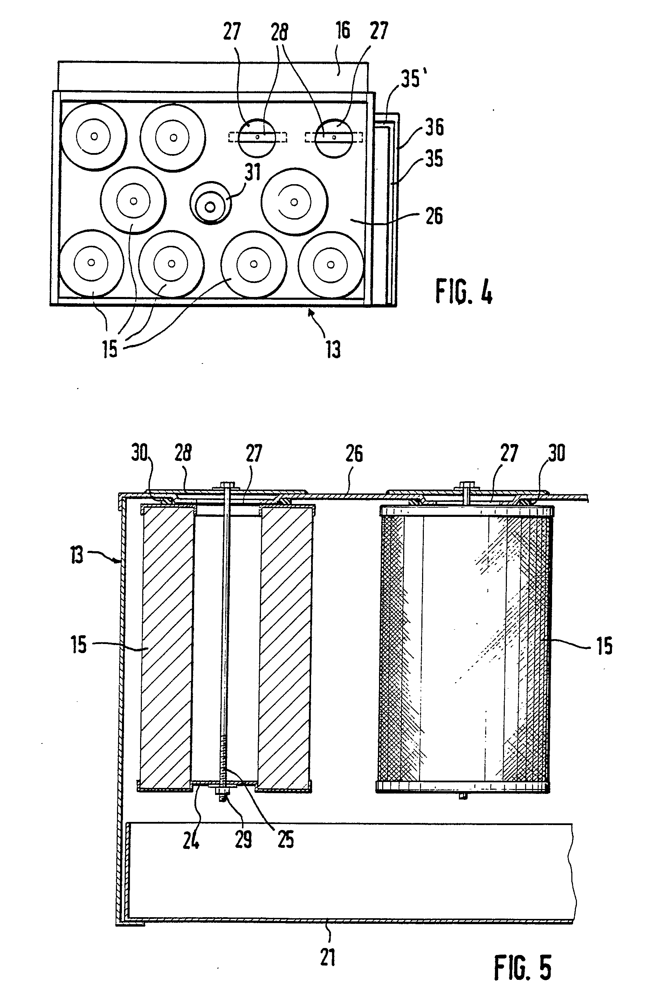

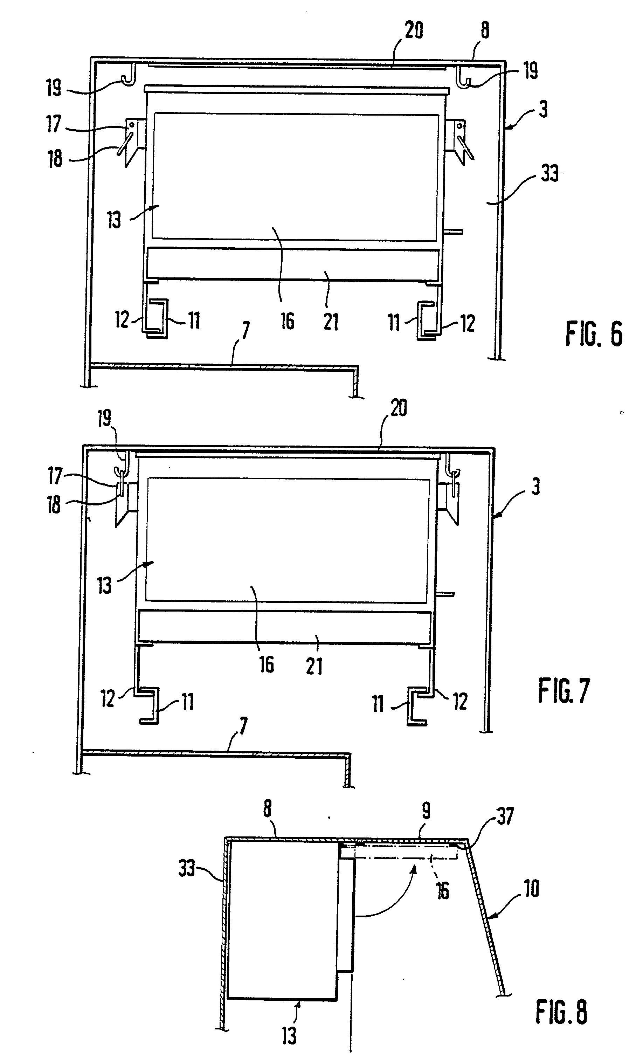

Eine derartige, in der Europäischen Patentschrift 0016440 beschriebene Mäh- und Kehrrichtung ermöglicht bei einfachem Aufbau ein sehr leichtes Befüllen und Wiederentleeren des Behälters, wobei - wie man speziell anhand der Figuren 5 und 8 der genannten Europäischen Patentschrift ersehen kann - das Mäh-oder Kehrwerk nicht mit dem Zugfahrzeug verbunden sein muß, sondern auch einen von Hand verschiebbaren Kehransaugkasten umfassen könnte.

So sehr sich diese bekannten Mähwerke in der Praxis für die Aufnahme von Mähgut oder Laub bewährt haben, so unbefriedigend arbeiten sie aber bei einem Einsatz als Behälter für Kehrmaschinen, da - jedenfalls dann, wenn nicht naß, d.h. unter Aufsprühen von Wasser auf dem Kehrbereich, gearbeitet wird - der Staub zum großen Teil zu fein ist, um sich beim Einblasen in den Behälter tatsächlich abzusetzen. Zumindest der recht erhebliche Feinstaubanteil wird beim Trockenkehren grundsätzlich wieder über die notwendigerweise in der Behälterdecke angeordneten Luftausblasöffnungen mit nach außen getragen, so daß der gesamte Kehreinsatz sinnlos wird.

Der Erfindung liegt die Aufgabe zugrunde, eine Mäh-und Kehrvorrichtung der eingangs genannten Art so auszugestalten, daß sie auch problemlos für das Tockenkehren eingesetzt werden kann.

Zur Lösung dieser Aufgabe ist eine gattungsgemäße Mäh-und Kehrvorrichtung erfindungsgemäß gekennzeichnet durch einen leicht lösbar unter die mit ersten Ausblasöffnungen versehene Behälterdecke einhängbaren Staubfilterkasten, dessen der Türklappe des Behälters zugewandte Einlaßklappe in der Öffnungsstellung zweite Deckenausblasöffnungen des Behälters dichtend verschließt.

Durch den erfindungsgemäßen Staubfilter läßt sich mit wenigen Handgriffen ein üblicherweise als Grasfangbehälter eingesetzter Behälter in einen Staubauffangbehälter für eine Kehrvorrichtung umbauen, so daß eine vorhandene Mähvorrichtung praktisch ohne nennenswerten zusätzlichen Aufwand - selbstverständlich unter Austausch des Mähwerks gegen ein Kehrwerk am Zugfahrzeug - in eine voll funktionsfähige und auch hohen Betriebsanforderungen gerecht werdende Kehrvorrichtung umgewandelt werden kann. Bei geöffneter, d.h. nach oben geschwenkter Einlaßklappe des Staubfilterkastens verschließt dieser darüberliegende Deckenöffnungen, wobei diese bevorzugt bereits im Bereich der hoch schwenkbaren Heckklappe angeordnet sein können. Der durch die Einblasöffnungen des geneigten Behälterbodens vom Gebläse angesaugte und in dem Behälter eingeblasene Staub wird - nachdem er bevorzugt durch ein Luftleitblech zunächst umgelenkt worden ist, damit sich der Grobstaub auf dem Boden absetzt - allenfalls mit seinen Feinstaubteilchen vom Luftstrom mitgenommen, wobei dieser Luftstrom wegen des Verschlusses der genannten Deckenöffnungen zwangsweise den Staubfilterkasten durchsetzen muß, da er nur über dessen obere Ausblasöffnungen mit den damit fluchtenden ersten Ausblasöffnungen der Behälterdecke nach außen gelangen kann. Der Staub setzt sich dabei auf den Filterkörpern ab, so daß nur die saubere Reinluft tatsächlich nach außen gelangen kann. Bei Einsatzfällen, bei denen eine solche Feinstaubentwicklung nicht stattfindet, d.h. insbesondere beim Naßkehren, schließt man einfach die Einlaßklappe des Staubfilterkastens. Dadurch werden die zweiten Ausblasöffnungen in der Behälterdecke frei und die Luft kann direkt nach oben austreten, ohne daß sie den Filterkasten überhaupt zu durchsetzen braucht.

Mit besonderem Vorteil kann der Staubfilterkasten eine Vielzahl von einseitig an der Decke aufgehängten hohlen, unten geschlossenen Filterzylindern umfassen, unter denen bevorzugt eine schubkastenartig herausziehbare Feinstaubwanne vorgesehen ist. Die Filterzylinder lassen sich dabei besonders einfach an in ihre oberen Ausblasöffnungen einragenden und mit der Bodenplatte verbundenen Spannstangen aufhängen, und zwar derart aufhängen, daß mit Hilfe eines an der Decke des Staubfangkastens befestigten Rüttelmotors mit Unwucht eine einfache periodische Reinigung der Filterzylinder möglich ist. Durch Einschalten des Rüttelmotors, der mit einem Kabel mit der Batterie oder Lichtmaschine des Zugfahrzeugs verbunden ist, wird die Deckwand des des Zugfahrzeugs verbunden ist, wird die Deckwand des Staubfilterkastens in Schwingungen versetzt, so daß die einseitig daran aufgehängten Filterzylinder Rüttelbewegungen ausführen, durch welche der außen an ihnen anhaftende Staub abgeschüttelt wird und in die Feinstaubwanne gelangt, die dann in entsprechenden Abständen periodisch geleert wird.

Um den Umbau einer erfindungsgemäßen Mähvorrichtung als Kehrvorrichtung besonders einfach durchführen zu können, sind im Behälter oberhalb der Einblasöffnungen des Gebläses Einschubschienen für nach innen gewinkelte Standfüße des Staubfilterkastens befestigt, so daß sich der Kasten sehr einfach in den Behälter einschieben läßt. Darüber hinaus sind noch Bügelknebelverschlüsse vorgesehen, die mit Haken an der Decke des Behälters zusammenwirkend ein Abheben und Verspannen des Staubfilterkastens gegen die Behälterdecke ermöglichen. Selbstverständlich könnte man dieses Aufhängen auch unmittelbar durchführen, doch müßte dann während des Einhakens der Bügel in die Deckenhaken das doch relativ schwere Gewicht des Staubfilterkastens von Hand abgefangen werden, was in der Praxis Schwierigkeiten bereitet, insbesondere wenn nur eine Bedienungsperson zur Verfügung steht.

Um eine wirksame Abdichtung zu erzielen, kann in Ausgestaltung der Erfindung vorgesehen sein, daß an der Deckfläche sowie der Einlaßklappe des Staubfilterkastens und/oder den ihnen zugeordneten Anlagebereichen der Behälterdecke umlaufende Dichtrahmen aus Gummi od.dgl. befestigt sind.

Schließlich liegt es auch noch im Rahmen der Erfindung, einen die Behälterrückwand durchsetzenden, an einem Verstellarm der Einlaßklappe angreifenden Verstellhebel mit einem in einem Seitenwandsteg mit Kulissenschlitz geführten Arretierarm vorzusehen. Auf diese Weise läßt sich von außen und ohne Öffnung des Behälters die Einlaßklappe des Staubfilterkastens zwischen seiner Öffnungs- und Verschließstellung verstellen, so daß das Umschalten von Naßkehren auf Trockenkehren rasch und mit einem Handgriff möglich ist und auch ein mehrfacher Wechsel erfolgen kann ohne daß hierzu der Behälter geöffnet werden müßte, was es ja wiederum erforderlich machen würde, daß dann der Behälter von dem bereits innen befindlichen Staub geleert werden müßte.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 eine schematische Ansicht eines als Anhänger für ein Zugfahrzeug ausgebildeten, zwischen Mähbetrieb und Kehrbetrieb einfach umrüstbaren Behälters,

Fig. 2 eine perspektivische Ansicht des in den Behälter einhängbaren Staubfilterkastens mit geschlossener Einlaßklappe,

Fig. 3 eine Ansicht des Staubfilterkastens mit nach oben geschwenkter Einlaßklappe und herausgezogener Feinstaubwanne,

Fig. 4 eine Untenansicht des Staubfilterkastens bei herausgenommener Feinstaubwanne,

Fig. 5 eine vergrößerte teilweise geschnittene Teilansicht des Staubfilterkastens zur Darstellung der besonderen Aufhängung der Filterzylinder,

Fig. 6 eine schematische Teilansicht von rückwärts in den Behälter mit dem zunächst eingeschobenen Staubfilterkasten,

Fig. 7 eine der Fig. 6 entsprechende Ansicht nach dem Abheben und Verspannen des Staubfilterkastens gegen die Behälterdecke, und

Fig. 8 eine schemtische teilweise geschnittene Seitenansicht zur Verdeutlichung des Verschließens der Ausblasöffnungen in der Deckwand durch die geöffnete Einlaßklappe des Staubfilterkastens.

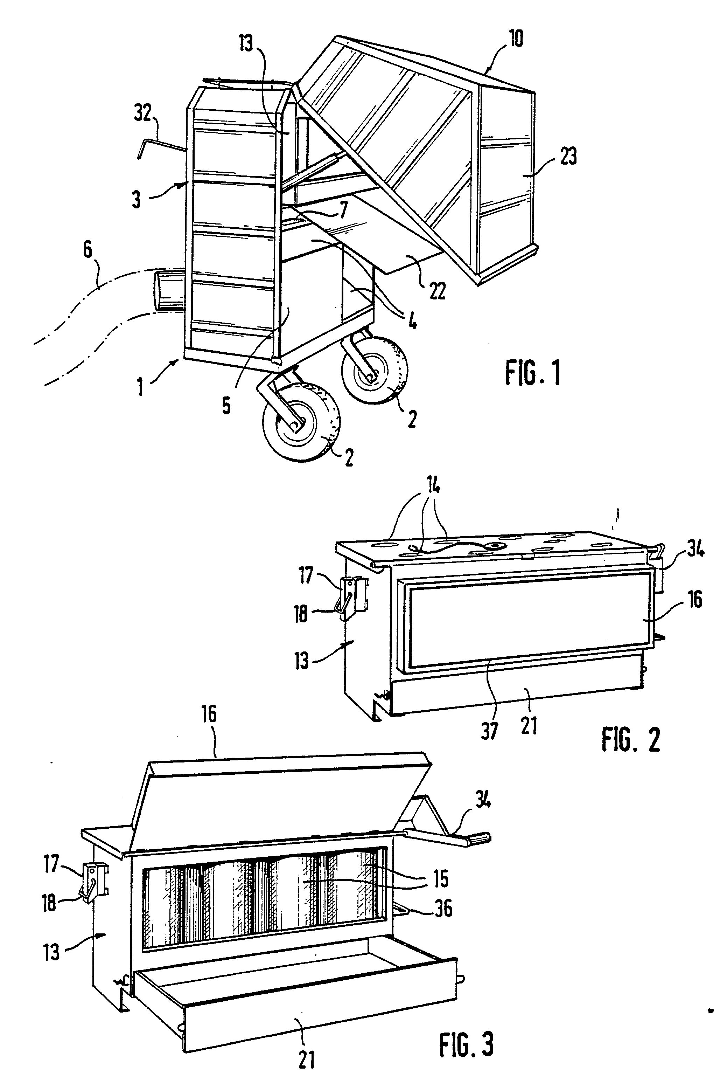

In Fig. 1 ist lediglich ein auf einem Nachläuferanhänger 1 mit Laufrädern 2 angeordneter Behälter 3 mit einem teilweise geneigten und nach innen einspringenden Behälterboden 4 dargestellt, unter dem im einzelnen nicht dargestellt ein Gebläse mit einem Antriebsmotor angeordnet ist. Für nähere Einzelheiten dieses Aufbaus verweisen wir auf die bereits genannte Europäische Patentschrift Nr. 0016440. Das Gebläse unter dem nach innen einspringenden Abschnitt 5 des Behälterbodens ist über eine nur strichpunktiert angedeutete flexible Schlauchleitung 6 mit einem ein Mähwerk bzw. ein Kehrwerk übergreifenden Ansaugkasten verbunden, um entweder Gras, Laub oder auch Staub anzusaugen und über Ausblasöffnungen 7 ins Innere des Behälters 3 einzublasen. Insoweit entspricht die Vorrichtung dem bereits vorhandenen Stand der Technik, wobei für den Austritt der Gebläseluft in der Deckwand 8 des Behälters sowie auch dem Deckwandabschnitt 9 der aufschwenkbaren Türklappe 10 Ausblasöffnungen vorgesehen sind.

Erfindungsgemäß sind im Behälter oberhalb der Ausblasöffnung 7 für das Gebläse Einschubschienen 11 für nach innen gewinkelte Standfüße 12 eines Staubfilterkastens 13 angeordnet, der in seiner Deckwand Ausblasöffnungen 14 aufweist, unter denen Filterzylinder 15 hängend angeordnet sind, während die in der Einschubstellung der aufschwenkbaren Türklappe 10 zugekehrte Seitenwand des Staubfilterkastens als am oberen Rand schwenkbar angelenkte Einlaßklappe 16 ausgebildet ist. Die Einschubschienen 11 dienen lediglich zur einfacheren Montage des Staubfilterkastens 13 im Behälter 3. Die eigentliche Montage erfolgt nämlich über Bügelknebelverschlüsse 17, deren Bügel 18 sich in der in Fig. 6 gezeigten Vormontage-Einschubstellung in Deckenhaken 19 einhängen lassen. Durch das anschließende Herunterdrücken der Knebelhebel wird der Staubfilterkasten von den Einschubschienen 11 abgehoben und klemmend gegen die Behälterdecke 8 verspannt, wobei zur Abdichtung an der Innenseite der Behälterdecke ein umlaufender Dichtrahmen 20 aus Gummi od.dgl. angeordnet ist.

In dieser angehobenen Stellung läßt sich zwischen die Einschubschienen 11 und die durch eine Feinstaubwanne 21 gebildete Unterseite des Staubfilterkastens ein in Fig. 1 dargestelltes Luftumlenkblech 22 einschieben, welches dafür sorgt, daß die aus der Einblasöffnung 7 austretende staubbeladene Luft zunächst nach unten gegen den Behälterboden, d.h. im vorliegenden Fall speziell den Boden 23 der Heckklappe, gelenkt wird, so daß sich die schwereren Schmutzteilchen dort absetzen. Lediglich der Feinstaub wird von der eingeblasenen Luft mitgenommen und wird im Staubfilterkasten herausgefiltert, was weiter unten im einzelnen noch näher beschrieben werden soll. Die Filterzylinder 15 sind mit Hilfe einer lösbar von unten aufsteckbaren Bodenplatte 24 und einer Spannstange 25 einseitig an der Deckwand 26 des Staubfilterkastens 13 aufgehängt, wobei das obere Ende der Spannstange 25 an einem die Ausblasöffnung 27 überbrückenden Steg 28 befestigt ist. Durch Anziehen der Schraubenmutter 29 an der Unterseite der Spannstange wird der Filterzylinder 15 mit seinem ihn unten verschließenden Boden 24 über eine umlaufende Dichtung 30 gegen die Deckwand 26 gedrückt. Die einseitige Aufhängung ermöglicht dabei in Verbindung mit einem in Fig. 4 angedeuteten Rüttelmotor 31 mit einer umlaufenden Unwuchtscheibe eine einfache periodische Reinigung der Filterzylinder. Durch den Rüttelmotor 31 läßt sich nämlich die Deckwand 26 in Schwingungen versetzen, die sich den Filterzylindern 15 als Rüttelbewegung mitteilen, so daß der außen an ihnen anhaftende Staub abgeschüttelt wird und in die Feinstaubwanne 21 fällt, die dann periodisch entleert wird. Die Verstellung der Einlaßklappe 16 zwischen der in Fig. 2 gezeigten Schließstellung und ihrer in Fig. 8 gezeigten aufgeklappten Stellung für das Trockenkehren erfolgt mit Hilfe eines Verstellhebels 32, der die Rückwand 33 des Behälters 3 durchsetzt und am inneren Ende an einem Verstellarm 34 der Einlaßklappe 16 angreift, wobei dieser Verstellarm 34 lediglich in den Figuren 2 und 3 mit eingezeichnet ist, während er der Übersichtlichkeit halber in den Figuren 6, 7 und 8 weggelassen worden ist. Der Verstellhebel ist dabei mit einem ebenfalls im einzelnen nicht gezeigten quer abstehenden Arretierarm versehen, der in einem Kulissenschlitz 35 eines Seitenwandstegs 36 des Staubfilterkastens 13 geführt ist, derart, daß er nach dem Einfallen in den nach innen gewinkelten Abschnitt 35' des Kulissenschlitzes ein Zurückfallen der Einlaßklappe 16 nach unten verhindert. In dieser nach oben um 90° aufgeschwenkten Stellung liegt die Einlaßklappe 16 mit einem umlaufenden Dichtrahmen 37 an der Unterseite des mit Ausblasöffnungen versehenen der Einlaßklappe 16. Es kann also die eingeblasene Luft ausschließlich dadurch aus dem Behälter 3 entweichen, indem sie die Filterzylinder 15 durchsetzt, um über die oberhalb der Ausblasöffnungen 27 angeordneten Ausblasöffnungen der Deckwand 8 des Behälters zu entweichen. Beim Umschalten vom Trockenkehren auf Naßkehren, bei dem es nicht notwendig ist, einen speziellen Staubfilter zusätzlich vorzusehen, wird durch leichtes Drehen des Verstellhebels 32 der Arretierarm entriegelt, so daß die Einlaßklappe 16 nach unten in die Schließstellung für den Staubfilterkasten gelangt und somit die eingeblasene Luft mit den Schmutzteilen lediglich über das Umlenkblech 22 umgelenkt wird, so daß sich der Schmutz auf dem Boden 23 absetzt. Die Luft selbst kann dann unmittelbar aus den Luftauslaßöffnungen des Abschnitts 9 der Türklappe entweichen, ohne daß sie nochmals gesondert gefiltert zu werden braucht.

Die Erfindung ist nicht auf das dargestellte Ausführungsbeispiel beschränkt. So ist es selbstverständlich nicht notwendig, daß der Behälter auf einem Nachläufer-Anhängerfahrwerk montiert ist. In gleicher Weise wäre es selbstverständlich auch denkbar, den mit dem Gebläse versehenen Behälter auf einem Lkw oder aufgesattelt auf einen Traktor od.dgl. zu verfahren. Im Extremfall wäre eine erfindungsgemäße Vorrichtung sogar für ein von Hand zu verschiebendes Fahrzeug sinnvoll einsetzbar, insbesondere bei kleinen Baugrößen für kleinere Betriebe, bei denen nicht allzu große Grasflächen bemäht und auch nicht allzu große sonstige Flächen gekehrt werden müssen. Entscheidend ist, daß durch die erfindungsgemäße Vorrichtung eine einfach aufgebaute billige und dennoch äußerst wirksame Kombinationsmaschine zur Verfügung steht, die sowohl das Schneiden und Aufsammeln von Gras oder Laub, als auch, mit nur wenigen Handgriffen umrüstbar, das Kehren und/oder Aufsaugen von Staub ermöglicht, Arbeiten, für die bisher jeweils sehr aufwendige Spezialmaschinen erforderlich waren. Dies ermöglicht es auch kleineren Betrieben oder kleineren Kommunen, eine wirksame maschinelle Rasenpflege und Straßenreinigung zu betreiben, obgleich sie nicht in der Lage wären, gleichzeitig teure Mähvorrichtungen und ebenso teure Kehr-Saugvorrichtungen zu beschaffen, die ja meist nur kurzzeitig und häufig auch zu unterschiedlichen Zeiten im Einsatz sind.

## Ansprüche

1. Mäh- und Kehrvorrichtung mit einem auf einem Fahrzeug angeordneten, nach rückwärts über eine aufschwenkbare Türklappe geschlossenen Behälter mit einem teilweise geneigten Behälterboden, in den über einen das vorzugsweise an einem Zugfahrzeug befestigte Mäh- bzw. Kehrwerk übergreifenden Ansaugkasten, eine flexible Rohrleitung und ein Gebläse das abgemähte Gras, Laub, Staub od.dgl. eingeblasen wird, wobei das Gebläse einschließlich seiner Antriebsvorrichtung unter dem geneigten Behälterboden am Fahrgestell angeordnet ist, gekennzeichnet durch einen leicht lösbar unter die mit ersten Ausblasöffnungen versehene Behälterdekke (8) einhängbaren Staubfilterkasten (13), dessen der Türklappe (10) des Behälters (3) zugewandte Einlaßklappe (16) in der Öffnungsstellung zweite Deckenausblasöffnungen (9) des Behälters dichtend verschließt.

2. Mäh- und Kehrvorrichtung nach Anspruch 1, dadurch gekennzeichnet, daß der Staubfilterkasten (13) eine schubkastenartig herausziehbare Feinstaubwanne (21) aufweist.

3. Mäh- und Kehrvorrichtung nach Anspruch 1 oder 2, dadurch gekennzeichnet, daß der Staubfilterkasten (13) eine Vielzahl von einseitig an der Decke (26) aufgehängten hohlen, unten geschlossenen Filterzylindern (15) umfaßt.

4. Mäh- und Kehrvorrichtung nach Anspruch 3, dadurch gekennzeichnet, daß die Filterzylinder (15) an in ihre oberen Ausblasöffnungen einragenden, mit der Bodenplatte (24) verbundenen Spannstangen (25) aufgehängt sind.

5. Mäh- und Kehrvorrichtung nach Anspruch 3 oder 4, gekennzeichnet durch einen an der Decke (26) des Staubfilterkastens befestigten Rüttelmotor (31) zum Reinigen der Filterzylinder (15).

6. Mäh- und Kehrvorrichtung nach einem der Ansprüche 1 bis 5, gekennzeichnet durch ein zwischen dem Staubfilterkasten (13) und den Boden-Einblasöffnungen (7) für das Gebläse einschiebbares, die Luft nach unten umleitendes Luftumlenkblech (22).

7. Mäh- und Kehrvorrichtung nach Anspruch 6, gekennzeichnet durch Einschubschienen (11) im Behälter (3) für nach innen gewinkelte Standfüße (12) des Staubfilterkastens (13) sowie Bügelknebelverschlüssen (17) zum Abheben und Verspannen des Staubfilterkastens (13) gegen die Behälterdekke (8).

8. Mäh - und Kehrvorrichtung nach einem der Ansprüche 1 bis 7, dadurch gekennzeichnet, daß an der Deckfläche (26) sowie der Einlaßklappe (16) des Staubfilterkastens (13) und/oder den ihnen zugeordneten Anlagebereichen (8, 9) der Behälterdecke umlaufende Dichtrahmen (20, 37) aus Gummi od.dgl. befestigt sind

9. Mäh- und Kehrvorrichtung nach einem der Ansprüche 1 bis 8, gekennzeichnet durch einen die Behälterrückwand durchsetzenden, an einem Verstellarm (34) der Einlaßklappe (16) angreifenden Verstellhebel (32) mit einem in einem Seitenwandsteg (36) mit Kulissenschlitz (35) geführten Arretierarm.

FIG. 1

FIG. 2

FIG. 3

FIG. 4

FIG. 5

FIG. 6

FIG. 7

FIG. 8